# EUROPEAN PATENT SPECIFICATION

(11) **EP 2 710 272 B1**
(45) Date of publication and mention of the grant of the patent: **23.01.2019**
(21) Application number: 12785628.4
(22) Date of filing: 03.04.2012
(51) Int. Cl.: F16C 33/10, F16C 32/04, F16C 39/02

(54) **COAST DOWN BUSHING FOR MAGNETIC BEARING SYSTEMS**
AUSLAUFBUCHSE FÜR MAGNETLAGERSYSTEME
DOUILLE DE DÉCÉLÉRATION EN ROUE LIBRE POUR SYSTÈMES DE PALIERS MAGNÉTIQUES

(30) Priority: 17.05.2011 US 201161486995 P
(43) Date of publication of application: 26.03.2014
(73) Proprietor: Dresser-Rand Company, Olean, NY 14760 (US)
(72) Inventor: MAIER, Martin D., Allegany, New York 14706 (US); KIDD, H. Allan, Shinglehouse, Pennsylvania 16748 (US)
(74) Representative: Haseltine Lake LLP
(86) International application number: PCT/US2012/031957
(87) International publication number: WO 2012/158266

(56) References cited:
- DE-A1-102008 031 994
- FR-A1- 2 882 409
- JP-A- 2002 106 565
- JP-A- 2004 340 248
- KR-A- 20070 106 390
- US-A- 1 122 565
- US-A1- 2004 112 800
- US-A1- 2004 228 554
- US-A1- 2006 177 166
- US-A1- 2006 257 059
- US-A1- 2007 253 858
- US-A1- 2011 052 109

## Description

### Background

This application claims priority to U.S. Patent Application Serial No. 61/486,995, which was filed May 17, 2011.

Magnetic bearings are often used to support a rotor using magnetic levitation. The magnetic bearings support the rotor without physical contact, thereby eliminating mechanical wear and exhibiting very low friction. One disadvantage to magnetic bearings, however, is their inability to accommodate high dynamic loads due to their limited load capacity. During peak transient load events, the bearings are unable to control rotor motion that can cause the rotor to contact the bearings and thereby result in significant damage thereto. To account for this, most active magnetic bearing systems employ one or more coast down bushings, also known as auxiliary, backup, secondary, or catcher bearings. Coast down bushings are designed to support the rotor in the event of a total failure of the magnetic bearing system while the machine is slowing down (*i.e*., coasting down), thereby preventing the rotor from impacting and damaging the adjacent magnetic bearings US2004/0112800 A1 discloses auxiliary sliding bearings in a construction using magnetic bearings.

Conventional coast down bushings leave a clearance between the bushing and the rotor, but do not generally rotate. During normal operation, the magnetic bearings support the rotor and hold it within this clearance such that the rotor rarely touches the coast down bushing. When the magnetic bearing system is shut down or fails, however, or during a shock event (e.g., rotor excursion) that exceeds the ability of the bearings to control rotor motion, the rotor is constrained by the coast down bushing. When the rotor impacts the coast down bushing, the rotational motion of the rotor is not always stable and very high stresses and dynamic loads are often endured by the coast down bushing. This is especially true during coast down events where the rotor is required to traverse one or more critical speeds while supported by the bushings. The dynamic loads are greatest and damage to the coast down bushing is most severe when the rotor engages in backward whirl, whereby the rotor orbits the interior of the catcher bearing in a direction opposite to the rotation of the rotor. Also, a large amount of heat is generated from the frictional contact between the rotor and the bushing, which can cause thermal growth and reduction in material strength of the coast down bushings. This damage is cumulative and ultimately results in failure of the bushing. Consequently, coast down bushings require frequent replacement which increases maintenance costs and entails machine downtime.

What is needed, therefore, is a low-friction coast down bushing that reduces the tendency for the rotor to engage in whirl, and especially backward whirl, during a rotor excursion or coast down event and simultaneously reduces detrimental heat generation.

US2006/257059A1, US1122565A and FR2882409A1 disclose self lubricating bearings.

### Summary

A coast down bushing of the invention is provided according to claim 1.

A method of the invention for reducing contact friction on a rotatable shaft is further provided according to claim 10.

Embodiments of the disclosure may further provide a rotating machine. The rotating machine may include a housing and a rotatable shaft arranged within the housing, the rotatable shaft having an outer surface, and a coast down bushing coupled to the housing and arranged about the rotatable shaft, the coast down bushing including an annular body having an inner radial surface radially-offset from the outer surface of the rotatable shaft. The rotating machine may further include a groove defined in the inner radial surface of the body, and a lubricating plug disposed within the groove.

### Brief Description of the Drawings

The present disclosure is best understood from the following detailed description when read with the accompanying Figures. It is emphasized that, in accordance with the standard practice in the industry, various features are not drawn to scale. In fact, the dimensions of the various features may be arbitrarily increased or reduced for clarity of discussion.
Figure 1A illustrates an end view of an exemplary coast down bushing, according to one or more embodiments disclosed.
Figure 1B illustrates a side view of the coast down bushing of Figure 1A.
Figure 2 illustrates a perspective view of an arcuate segment of the coast down bushing of Figures 1A and 1B.
Figure 3A illustrates an end view of another exemplary coast down bushing, according to one or more embodiments disclosed.
Figure 3B illustrates a side view of the coast down bushing of Figure 3A.
Figure 4 illustrated is a perspective view of an arcuate segment of the coast down bushing of Figures 3A and 3B, according to one or more embodiments described.
Figure 5A illustrates a partial, cross-sectional, side view of an exemplary coast down bushing, according to one or more embodiments disclosed.
Figure 5B illustrates a top view of the coast down bushing of Figure 5A.
Figure 6 illustrates a flowchart of a method for reducing contact friction on a rotatable shaft of a rotating machine, according to one or more embodiments disclosed.

### Detailed Description

It is to be understood that the following disclosure describes several exemplary embodiments for implementing different features, structures, or functions of the invention. Exemplary embodiments of components, arrangements, and configurations are described below to simplify the present disclosure; however, these exemplary embodiments are provided merely as examples and are not intended to limit the scope of the invention. Additionally, the present disclosure may repeat reference numerals and/or letters in the various exemplary embodiments and across the Figures provided herein. This repetition is for the purpose of simplicity and clarity and does not in itself dictate a relationship between the various exemplary embodiments and/or configurations discussed in the various Figures. Moreover, the formation of a first feature over or on a second feature in the description that follows may include embodiments in which the first and second features are formed in direct contact, and may also include embodiments in which additional features may be formed interposing the first and second features, such that the first and second features may not be in direct contact. Finally, the exemplary embodiments presented below may be combined in any combination of ways, *i.e.,* any element from one exemplary embodiment may be used in any other exemplary embodiment, without departing from the scope of the disclosure.

Additionally, certain terms are used throughout the following description and claims to refer to particular components. As one skilled in the art will appreciate, various entities may refer to the same component by different names, and as such, the naming convention for the elements described herein is not intended to limit the scope of the invention, unless otherwise specifically defined herein. Further, the naming convention used herein is not intended to distinguish between components that differ in name but not function. Additionally, in the following discussion and in the claims, the terms "including" and "comprising" are used in an open-ended fashion, and thus should be interpreted to mean "including, but not limited to." All numerical values in this disclosure may be exact or approximate values unless otherwise specifically stated. Accordingly, various embodiments of the disclosure may deviate from the numbers, values, and ranges disclosed herein without departing from the intended scope. Furthermore, as it is used in the claims or specification, the term "or" is intended to encompass both exclusive and inclusive cases, *i.e.,* "A or B" is intended to be synonymous with "at least one of A and B," unless otherwise expressly specified herein.

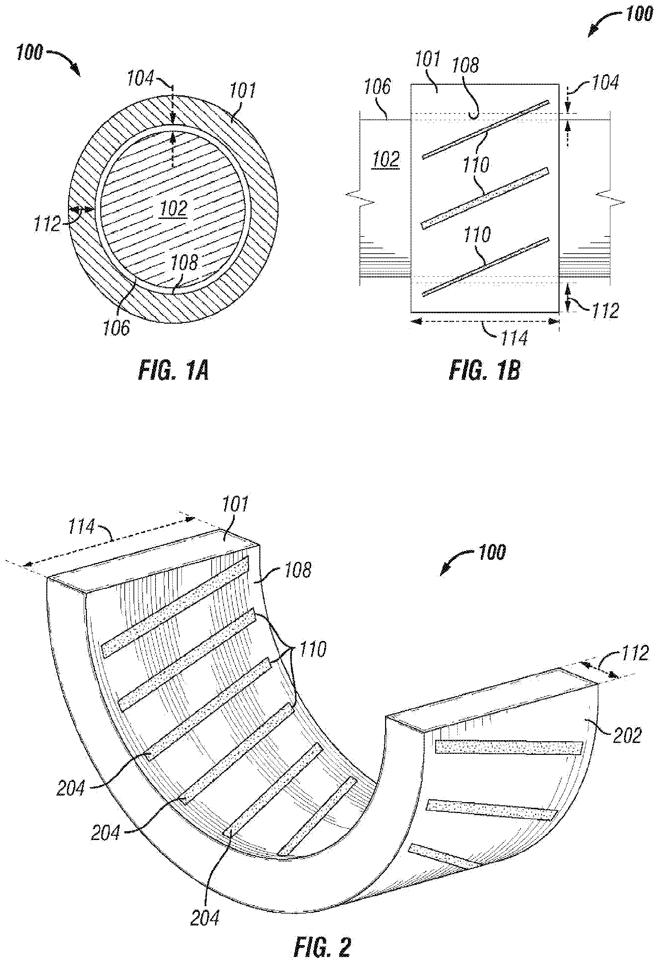

Figures 1A and 1B illustrate end and side views, respectively, of an exemplary coast down bushing 100, according to one or more embodiments. The coast down bushing 100, also known as an auxiliary, backup, catcher, or secondary bearing, may be configured to extend circumferentially about a rotatable shaft 102, or rotor. The rotatable shaft 102 may be arranged within various types of rotating machinery (not shown) such as, but not limited to, compressors, pumps, turbines, blowers, fans, expanders, motors, generators, rotary separators, and/or combinations thereof. The shaft 102 may be principally supported at each end by a primary bearing system (not shown), such as an active or passive magnetic bearing system. The bushing 100 may be used as a backup bearing in the event the primary bearing system fails or in the event the shaft 102 absorbs a shock load (e.g., a rotor shock event) that threatens to force the shaft 102 into impacting the primary bearings.

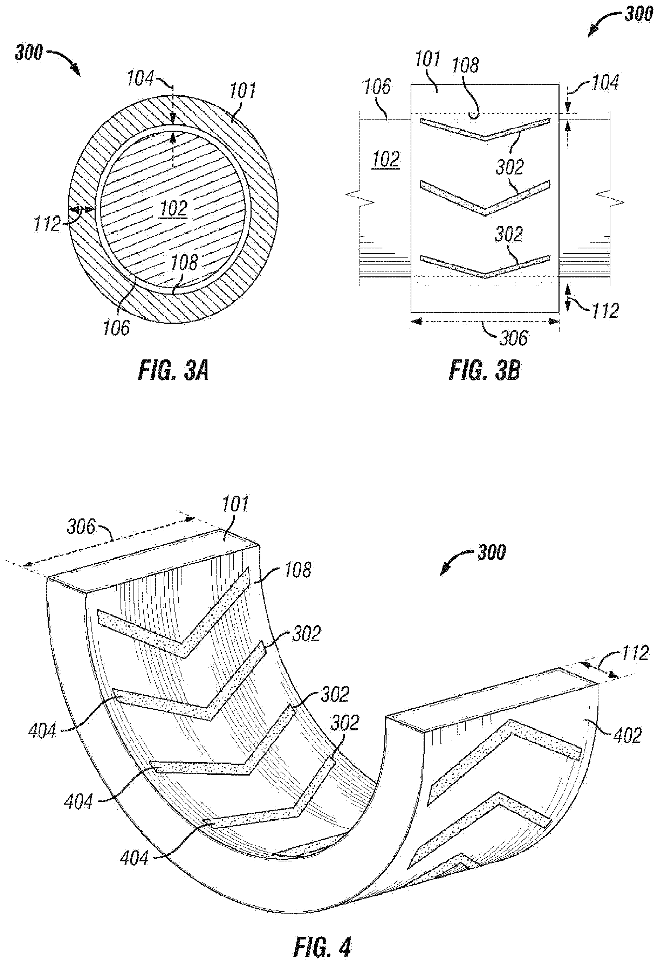

In one embodiment, the bushing 100 may include a generally annular body 101. In other embodiments, however, the body 101 may be of a split construction (see Figures 2 and 4) having two or more arcuate segments that may be coupled together to form a complete annulus. The body 101 may be made from a material that exhibits a low frictional coefficient. For example, the base material for the body 101 may be made of a low strength material (relative to the shaft 102) and adapted to reduce heat generation and preclude backward whirl of the shaft 102. The material may also have high thermal conductivity configured to conduct heat away from any contact surfaces of the body 101 in order to prevent localized hot spots which may degrade material properties. In general, copper alloys possess these qualities. In one embodiment, the body 101 may be made of spinodal copper, such as commercially-available TOUGHMET® spinodal copper. In other embodiments, however, the body 101 may be made of a copper-beryllium alloy or any other copper alloy that exhibits a low frictional coefficient.

The bushing 100 may be configured as a stationary component coupled to the inner axial face of a rotating machine housing (not shown). In other embodiments, however, the bushing 100 may be rotatable and disposed within a compliant retainer (not shown) configured to reduce impact load. A material that provides damping, such as a metal mesh, may be disposed within the compliant structure to reduce amplitude while passing through any resonance conditions during deceleration. During operation, the bushing 100 may be radially-offset from the shaft 102, thereby providing a gap 104 that allows the shaft 102 to freely rotate. Specifically, the gap 104 is defined between the outer radial surface 106 of the shaft 102 and the inner radial surface 108 of the body 101. During a rotor excursion, or in the event the primary bearing system fails, the bushing 100 may be configured catch the shaft 102 and impede its radial advancement before impacting any adjacent primary bearings and causing serious damage thereto.

The coast down bushing 100 may also define a plurality of grooves 110 that are circumferentially-offset from each other about the circumference of the body 101 and spanning the majority of its axial length 114, for example. In one embodiment, the grooves 110 may span a smaller portion of the axial length 114 and not the majority thereof. Each groove 110 may be machined into the body 101 and extend through the entire thickness 112 thereof.

Not according to the invention, the grooves 110 may originate at the inner radial surface 108 of the body 101 and extend only partially through the thickness 112 thereof. As illustrated, the grooves 110 of the invention are linear and generally parallel to each other. Moreover, the grooves may be slanted or at an angle with respect to the axial ends of the body 101. It will be appreciated by those skilled in the art, that, not according to the invention, the grooves 110 may be divergent and/or slanted at various different angles. Not according to the invention, the grooves 110 may be curved.

Referring to Figure 2, illustrated is a perspective view of an arcuate segment of the coast down bushing 100, according to one or more embodiments described. As illustrated, each groove 110 extend through the thickness 112 of the body 101 from the inner radial surface 108 to the outer radial surface 202 thereof. Again, not according to the invention, other embodiments may include grooves 110 that extend only partially through the thickness 112 of the body 101, but not all the way through to the outer radial surface 202. Moreover, each groove 110 may be filled with or otherwise in-laid with a lubricating plug 204. The lubricating plugs 204 may be lubricious inserts configured to convey a lubricant each time the shaft 102 makes contact with the inner radial surface 108 of the body 101. In one embodiment, the lubricating plugs 204 may be made of an anti-friction material, such as graphite or a graphite alloy. As will be appreciated, however, any similarly lubricious material or substance may be used without departing from the scope of the disclosure.

In operation, the lubricating plugs 204 disposed within the grooves 110 may be configured to simultaneously lubricate the inner radial surface 108 of the body 101 and the outer radial surface 106 of the shaft 102 when contact between the two surfaces 108, 106 is made. As the inner radial surface 108 wears, layers of the lubricious plugs 204 shear off and provide a constant supply of lubrication. The addition of the lubricating plugs 204 provides added and continuous lubrication during coast down ora rotor excursion, without which, galling of the inner radial surface 108 and/or premature seizure of the shaft 102 may result. Moreover, the added lubrication reduces long-term wear on the bushing 100 and also reduces friction heat buildup that would otherwise result in thermal growth of the bushing 100. Consequently, the lubricating plugs 204 increase the lifespan of the bushing 100 and eliminate the need to use a lubricating film or fluid, which could potentially contaminate and/or damage adjacent primary bearings.

Referring now to Figures 3A and 3B, illustrated are end and side views, respectively, of another exemplary coast down bushing 300, according to one or more embodiments. The coast down bushing 300 may be substantially similar in several respects to the coast down bushing 100 described above with reference to Figures 1A and 1B. Accordingly, the coast down bushing 300 may be best understood with reference to the coast down bushing 100, where like numerals indicate like elements and therefore will not be described again in detail. The body 101 of the coast down bushing 300 may define a plurality of grooves 302 circumferentially-offset from each other about the circumference of the entire body 101. Similar to the grooves 110 described above, each groove 302 may be machined into the body 101 and extend through the entire thickness 112 thereof. In other embodiments, not according to the invention, the grooves 302 may originate at the inner radial surface 108 of the body 101 and extend only partially through the thickness 112 thereof.

As illustrated, each groove 302 may be generally "v" shaped and span a majority of the axial length 306 of the body 101, for example. In other embodiments, however, the grooves 302 may be formed in different shapes, designs, and/or sizes, without departing from the scope of the disclosure. For example, in one embodiment, the grooves 302 may span a smaller portion of the axial length 306 and not the majority thereof. In other embodiments, not part of the invention, the base of the "v" may be generally rounded so as to resemble a "u" shape in some respects.

Referring to Figure 4, illustrated is a perspective view of an arcuate segment of the coast down bushing 300, according to one or more embodiments described. As illustrated, each groove 302 may extend through the thickness 112 of the body 101 from the inner radial surface 108 to the outer radial surface 402 thereof. Moreover, similar to the grooves 110 described above, each groove 302 may be filled with or otherwise in-laid with a lubricating plug 404 made of an anti-friction substance, such as graphite or a graphite alloy. The lubricating plugs 404 convey a lubricant each time the inner radial surface 108 of the body 101 and the outer radial surface 106 of the shaft 102 (Figures 3A and 3B) come into contact with each other. Upon contact with the shaft 102, layers of lubrication shear off from the lubricating plugs 404 and provide a lubricated engagement.

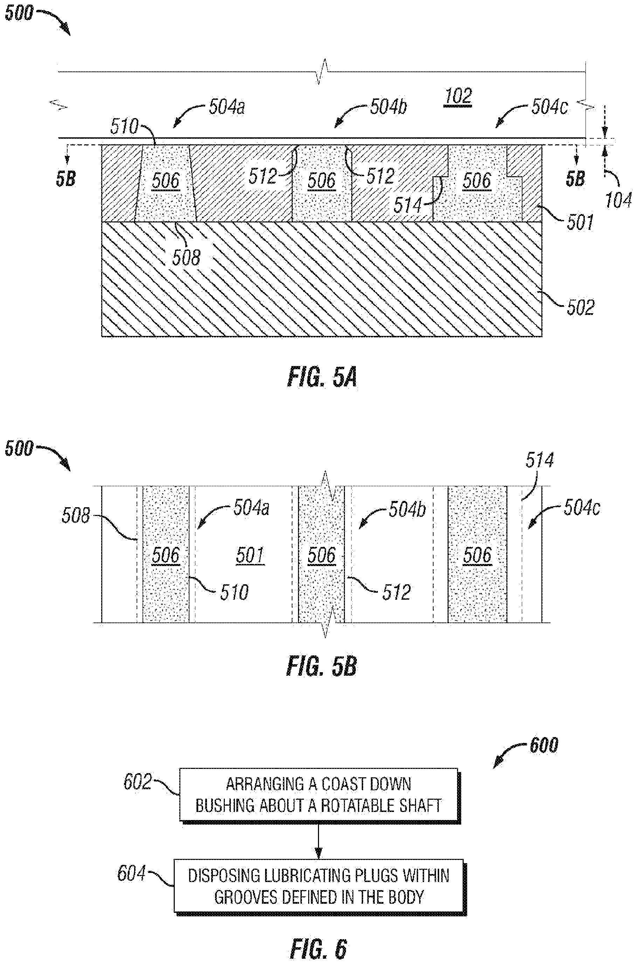

Referring to Figures 5A and 5B, illustrated are partial, cross-sectional side (Figure 5A) and top (Figure 5B) views of a coast down bushing 500. As indicated, Figure 5B is taken along the line indicated in Figure 5A. The coast down bushing 500 may be generally representative of the prior disclosed bushings 100 and 300, as described herein. Accordingly, reference should be made to the descriptions provided above for each bushing 100, 300 to better understand the general characteristics of the coast down bushing 500.

As illustrated, the bushing 500 has a body 501 that is radially offset from the shaft 102, thereby forming a gap 104 therebetween. On its opposite side, for example, the body 501 may be coupled to a rotating machine housing 502. Figure 5A depicts the longitudinal cross-section of a plurality of exemplary grooves 504 that may be defined in the body 501 and filled with a corresponding lubricating plug 506. It will be appreciated that the grooves 504 and lubricating plugs 506 may be representative of the grooves 110, 302 and the lubricating plugs 204, 404, respectively, described above.

The housing 502 provides a biasing engagement with the bottom of each groove 504a,b,cthat is adapted to hold the plug 506 in the corresponding groove 504 from the bottom end. Moreover, each groove 504 may further provide different shapes and/or configurations adapted to retain the lubricating plug 506 within the corresponding groove 504 from the top. For example, the first groove 504a may provide a generally trapezoidal or dove-tail cross-section, where the radius at the bottom 508 is greater than the radius at the top 510 of the first groove 504a. The second groove 504b may provide a generally rectangular cross-section, but may trap or otherwise hold the lubricating plug 506 inside the groove 504b by bending over (*i.e.,* peening) an annular rim 512 of the second groove 504b. The third groove 504c may be define an annular shoulder 514 at an intermediate point whereby the annular shoulder 514 and the biasing engagement with the housing 502 jointly retain the lubricating plug 506 within the groove 504c.

The lubricating plugs 506 may be seated or otherwise received within each groove 504 via a variety of processes. For example, the lubricating plugs 504 may be mechanically pressed into the grooves 504a,b,c from either radial surface. In another embodiment, the body 501 may be heated to expand the opening of each groove 504 and after the lubricating plug 506 is properly inserted therein, the body 501 may be cooled to provide a shrink fit engagement between the lubricating plug 506 and respective groove 504. While only three different shapes and/or configurations of grooves 504 are shown in Figures 5A and 5B, it will be appreciated that several other shapes and/or configurations may be employed For example, several different polygonal cross-sectional shapes may be used to retain the plugs 506, without departing from the scope of the disclosure.

Referring now to Figure 6, illustrated is a flowchart of a method 600 for reducing contact friction on a rotatable shaft of a rotating machine. The method 600 may include arranging a coast down bushing about the rotatable shaft, as at 602. The coast down bushing may include any of the bushings 100, 300, 500 described herein. For example the coast down bushings may include an annular body having an inner radial surface radially-offset from and adjacent an outer surface of the rotatable shaft. The method 600 may also include disposing lubricating plugs within grooves defined in the inner radial surface of the body, as at 604. Each groove may be circumferentially-offset from an adjacent groove about the entirety of the circumference of the body. The lubricating plugs may provide lubrication between the inner radial surface of the annular body and an outer surface of the rotatable shaft when the coast down bushing catches the rotatable shaft during, for example, a coast down event or when a magnetic bearing system is shut down.

The foregoing has outlined features of several embodiments so that those skilled in the art may better understand the present invention. Those skilled in the art should appreciate that they may readily use the present disclosure as a basis for designing or modifying other processes and structures for carrying out the same purposes and/or achieving the same advantages of the embodiments introduced herein, the invention being defined by the appended claims only.

## Claims

1. A coast down bushing (100), comprising:
an annular body (101) having inner and outer radial surfaces (108, 202) and an axial length (114);
grooves (110) defined in the annular body and extending from the inner radial surface (108) to the outer radial surface (202) of the annular body, each groove spanning across a portion of the axial length (114) and being circumferentially-offset from an adjacent groove, wherein the grooves are linear and parallel to each other about a circumference of the annular body; and
a lubricating plug (204) disposed within each groove (110).

2. The coast down bushing (100) of claim 1, wherein a longitudinal cross-section of at least one of the grooves (110) is dove-tailed.

3. The coast down bushing (100) of claim 1, wherein the annular body (101) comprises two or more arcuate segments that are coupled together.

4. The coast down bushing (100) of claim 1, wherein the annular body (101) comprises a material having a low frictional coefficient.

5. The coast down bushing (100) of claim 4, wherein the material includes spinodal copper.

6. The coast down bushing (100) of claim 4, wherein the material includes a copper alloy.

7. The coast down bushing (100) of claim 1, wherein the grooves (110) are disposed at an angle with respect to axial ends of the annular body (101).

8. The coast down bushing (100) of claim 1, wherein the lubricating plug (204) is made of an anti-friction material.

9. The coast down bushing (100) of claim 8, wherein the anti-friction material includes graphite.

10. A method for reducing contact friction on a rotatable shaft (102), comprising:
arranging a coast down bushing (100) about the rotatable shaft in a non-contact position, the coast down bushing (100) comprising:
an annular body (101) having an inner radial surface (108) and an outer radial surface (202),
grooves (110) defined in the annular body and extending from the inner radial surface (108) to the outer radial surface (202) of the annular body, each groove spanning across a portion of an axial length (114) of the annular body and being circumferentially-offset from an adjacent groove, wherein the grooves are linear and parallel to each other about a circumference of the annular body, and
a lubricating plug (204) disposed within each groove (110); and
catching the rotatable shaft (102) with the auxiliary bearing (100) such that the lubricating plug (204) shears and provides lubrication between the inner radial surface (108) of the annular body and an outer surface of the rotatable shaft (102).

11. A rotating machine, comprising:
a housing and a rotatable shaft (102) arranged within the housing, the rotatable shaft having an outer surface; and
the coast down bushing (100) of claim 1 coupled to the housing and arranged about the rotatable shaft, wherein the inner radial surface (108) of the annular body is radially-offset from the outer surface of the rotatable shaft.

12. The rotating machine of claim 11, wherein the annular body (101) is at least partially made of spinodal copper.

13. The rotating machine of claim 11, wherein the lubricating plug (204) is at least partially made of graphite, a graphite alloy, or a combination thereof.

## Patentansprüche

1. Auslaufbuchse (100), die Folgendes umfasst:
einen ringförmigen Körper (101), der eine innere und eine äußere radiale Fläche (108, 202) und eine axiale Länge (114) aufweist,
Rillen (110), die in dem ringförmigen Körper definiert sind und sich von der inneren radialen Fläche (108) zu der äußeren radialen Fläche (202) des ringförmigen Körpers erstrecken, wobei sich jede Rille über einen Abschnitt der axialen Länge (114) spannt und in Umfangsrichtung gegenüber einer benachbarten Rille versetzt ist, wobei die Rillen um einen Umfang des ringförmigen Körpers linear und parallel zueinander sind, und
einen schmierenden Pfropfen (204), der innerhalb jeder Rille (110) angeordnet ist.

2. Auslaufbuchse (100) nach Anspruch 1, wobei ein Längsquerschnitt wenigstens einer der Rillen (110) schwalbenschwanzförmig ist.

3. Auslaufbuchse (100) nach Anspruch 1, wobei der ringförmige Körper (101) zwei oder mehr bogenförmige Segmente umfasst, die miteinander verbunden sind.

4. Auslaufbuchse (100) nach Anspruch 1, wobei der ringförmige Körper (101) einen Werkstoff umfasst, der einen niedrigen Reibungskoeffizienten aufweist.

5. Auslaufbuchse (100) nach Anspruch 4, wobei der Werkstoff spinodales Kupfer einschließt.

6. Auslaufbuchse (100) nach Anspruch 4, wobei der Werkstoff eine Kupferlegierung einschließt.

7. Auslaufbuchse (100) nach Anspruch 1, wobei die Rillen (110) in einem Winkel in Bezug auf axiale Enden des ringförmigen Körpers (101) angeordnet sind.

8. Auslaufbuchse (100) nach Anspruch 1, wobei der schmierende Pfropfen (204) aus einem reibungsmindernden Werkstoff hergestellt ist.

9. Auslaufbuchse (100) nach Anspruch 8, wobei der reibungsmindernde Werkstoff Graphit einschließt.

10. Verfahren zum Verringern von Berührungsreibung an einer drehbaren Welle (102), das Folgendes umfasst:
Anordnen einer Auslaufbuchse (100) um die drehbare Welle in einer berührungslosen Stellung, wobei die Auslaufbuchse (100) Folgendes umfasst:
einen ringförmigen Körper (101), der eine innere radiale Fläche (108) und eine äußere radiale Fläche (202) aufweist,
Rillen (110), die in dem ringförmigen Körper definiert sind und sich von der inneren radialen Fläche (108) zu der äußeren radialen Fläche (202) des ringförmigen Körpers erstrecken, wobei sich jede Rille über einen Abschnitt einer axialen Länge (114) des ringförmigen Körpers spannt und in Umfangsrichtung gegenüber einer benachbarten Rille versetzt ist, wobei die Rillen um einen Umfang des ringförmigen Körpers linear und parallel zueinander sind, und
einen schmierenden Pfropfen (204), der innerhalb jeder Rille (110) angeordnet ist, und
Erfassen der drehbaren Welle (102) mit dem Hilfslager (100) derart, dass der schmierende Pfropfen (204) abschert und Schmierung zwischen der inneren radialen Fläche (108) des ringförmigen Körpers und einer äußeren Fläche der drehbaren Welle (102) bereitstellt.

11. Sich drehende Maschine, die Folgendes umfasst:
ein Gehäuse und eine drehbare Welle (102), die innerhalb des Gehäuses angeordnet ist, wobei die drehbare Welle eine äußere Fläche aufweist, und
die Auslaufbuchse (100) nach Anspruch 1, die mit dem Gehäuse verbunden und um die drehbare Welle angeordnet ist, wobei die innere radiale Fläche (108) des ringförmigen Körpers in Radialrichtung gegenüber der äußeren Fläche der drehbaren Welle versetzt ist.

12. Sich drehende Maschine nach Anspruch 11, wobei der ringförmige Körper (101) wenigstens teilweise aus spinodalem Kupfer hergestellt ist.

13. Sich drehende Maschine nach Anspruch 11, wobei der schmierende Pfropfen (204) wenigstens teilweise aus Graphit, einer Graphitlegierung oder einer Kombination derselben hergestellt ist.

## Revendications

1. Douille de décélération en roue libre (100) comprenant :
un corps annulaire (101) ayant des surfaces radiales intérieure et extérieure (108, 202) et une longueur axiale (114) ;
des rainures (110) définies dans le corps annulaire et s'étendant depuis la surface radiale interne (108) jusqu'à la surface radiale externe (202) du corps annulaire, chaque rainure s'étendant sur une partie de la longueur axiale (114) et étant décalée de manière circonférentielle par rapport à une rainure adjacente, dans laquelle les rainures sont linéaires et parallèles les unes aux autres autour d'une circonférence du corps annulaire ; et
un bouchon de lubrification (204) disposé dans chaque rainure (110).

2. Douille de décélération en roue libre (100) selon la revendication 1, dans laquelle une section transversale longitudinale d'au moins une des rainures (110) est en queue d'aronde.

3. Douille de décélération en roue libre (100) selon la revendication 1, dans laquelle le corps annulaire (101) comprend deux segments arqués ou plus qui sont couplés ensemble.

4. Douille de décélération en roue libre (100) selon la revendication 1, dans laquelle le corps annulaire (101) comprend un matériau ayant un faible coefficient de frottement.

5. Douille de décélération en roue libre (100) selon la revendication 4, dans laquelle le matériau comprend du cuivre spinodal.

6. Douille de décélération en roue libre (100) selon la revendication 4, dans laquelle le matériau comprend un alliage de cuivre.

7. Douille de décélération en roue libre (100) selon la revendication 1, dans laquelle les rainures (110) sont disposées selon un angle par rapport à des extrémités axiales du corps annulaire (101).

8. Douille de décélération en roue libre (100) selon la revendication 1, dans laquelle le bouchon de lubrification (204) est constitué d'un matériau anti-frottement.

9. Douille de décélération en roue libre (100) selon la revendication 8, dans laquelle le matériau anti-frottement comprend du graphite.

10. Procédé pour réduire le frottement de contact sur un arbre rotatif (102), comprenant les étapes consistant à :
agencer une douille de décélération en roue libre (100) autour de l'arbre rotatif dans une position sans contact, la douille de décélération en roue libre (100) comprenant :
un corps annulaire (101) ayant une surface radiale interne (108) et une surface radiale externe (202),
des rainures (110) définies dans le corps annulaire et s'étendant depuis la surface radiale interne (108) jusqu'à la surface radiale externe (202) du corps annulaire, chaque rainure s'étendant sur une partie d'une longueur axiale (114) du corps annulaire et étant décalée de manière circonférentielle par rapport à une rainure adjacente, les rainures étant linéaires et parallèles les unes aux autres autour d'une circonférence du corps annulaire, et
un bouchon de lubrification (204) disposé dans chaque rainure (110) ; et
attraper l'arbre rotatif (102) avec le palier auxiliaire (100) de sorte que le bouchon de lubrification (204) cisaille et fournit une lubrification entre la surface radiale interne (108) du corps annulaire et une surface externe de l'arbre rotatif (102).

11. Machine rotative comprenant :
un logement et un arbre rotatif (102) agencé à l'intérieur du logement, l'arbre rotatif ayant une surface externe ; et
la douille de décélération en roue libre (100) selon la revendication 1, couplée au logement et agencée autour de l'arbre rotatif, dans laquelle la surface radiale interne (108) du corps annulaire est décalée radialement par rapport à la surface externe de l'arbre rotatif.

12. Machine rotative selon la revendication 11, dans laquelle le corps annulaire (101) est au moins partiellement constitué de cuivre spinodal.

13. Machine rotative selon la revendication 11, dans laquelle le bouchon de lubrification (204) est au moins partiellement constitué de graphite, d'un alliage de graphite ou d'une combinaison de ceux-ci.
